# NOUVEAU FASCICULE DE BREVET EUROPEEN

(11) **EP 0 296 945 B2**
(45) Date de publication et mention de la décision concernant l'opposition: **30.11.1994**
(45) Mention de la délivrance du brevet: 21.08.1991
(21) Numéro de dépôt: 88401504.1
(22) Date de dépôt: 16.06.1988
(51) Int. Cl.: F16K 3/34

(54) **Disque percé d'une ouverture et robinet le comportant**
Scheibe mit einer Öffnung und mit einer derartigen Scheibe ausgestattetes Ventil
Disc having one aperture, and valve provided therewith

(30) Priorité: 17.06.1987 FR 8708466
(43) Date de publication de la demande: 28.12.1988
(73) Titulaire: CERAMIQUES TECHNIQUES DESMARQUEST, F-92400 Courbevoie (FR)
(72) Inventeur: Hernandez, Michel, F-93600 Aulnay Sous Bois (FR); Herve, Patrice, F-75019 Paris (FR); Gougouyan, Yves, F-75015 Paris (FR)
(74) Mandataire: Rinuy, Santarelli

(56) Documents cités:
- DE-A- 2 803 663
- DE-A- 3 320 387
- FR-A- 910 720
- GB-A- 1 549 789
- US-A- 3 987 819
- US-A- 4 161 307
- US-A- 4 453 567

## Description

La présente invention se rapporte aux dispositifs connus sous le nom de robinets destinés à réguler le débit d'un fluide, généralement de l'eau, depuis une position arrêt jusqu'à un débit maximum adapté aux besoins des utilisateurs.

Les robinets les plus répandus sont constitués d'un siège fixe, percé d'une ouverture circulaire pour le passage du liquide. Un clapet mobile en caoutchouc se déplace, en fonction de l'action subie par une poignée de manoeuvre du robinet, perpendiculairement à la surface du siège. Le réglage du débit est obtenu en faisant varier l'écartement entre la surface du siège et le clapet mobile.

Ce type de robinet présente de nombreux inconvénients :
- usure rapide,
- imprécision de la position de fermeture du clapet et, a fortiori de la poignée de manoeuvre associée,
- évolution des performances au cours du temps ...

C'est pourquoi une nouvelle génération de produits, utilisant en pratique des plaquettes en céramique, a été mise au point. Le principe en est le suivant:

Deux disques, généralement en alumine, sont percés d'une ou plusieurs ouvertures en secteurs et comportent chacun au moins une face très plane et fortement polie.

Les secteurs sont sensiblement identiques et en nombre égal sur l'un et l'autre des disques et occupent des positions angulaires adaptées à venir en correspondance en une position angulaire relative donnée des deux disques.

Ces deux disques sont superposés face polie contre face polie, et le fluide dont on souhaite réguler le débit est alimenté derrière l'un des deux disques (généralement fixe).

Un dispositif mécanique lié à la poignée de manoeuvre du robinet permet la rotation de l'un des disques par rapport à l'autre.

Selon que l'on met ou non en coïncidence les ouvertures, on obtient ou non passage du fluide. L'importance du recouvrement des ouvertures permet de réguler l'importance du débit.

Des robinets de ce type ont notamment été décrits dans le brevet US-A-2.165.639.

La plupart des produits disponibles sur le marché comportent, pour chaque disque, une ou deux ouvertures limitées respectivement par une ou deux droites parallèles aux diamètres du disque et par un arc de cercle concentrique avec le périmètre du disque :

Dans le cas de disques à une ouverture, la forme de cette dernière est approximativement celle d'un demi-disque. Le débit maximum est obtenu pour une rotation de 180°. Ces robinets sont, par extension, appelés "demi-tour".

Dans le cas de disques à deux ouvertures, la forme retenue est approximativement un quart de disque ; le débit maximum est obtenu pour une rotation de 90°. Ces robinets sont, par extension, appelés "quart de tour".

Dans les deux cas on constate une symétrie de la forme des ouvertures qui peuvent toujours être partagées par un axe bissecteur passant par le centre du disque.

Ces robinets présentent plusieurs inconvénients:
- insuffisance de la plage de réglage qui est théoriquement de 180° maximum et pratiquement beaucoup plus faible du fait des problèmes de recouvrement. Il est à noter en effet que les secteurs de l'un ou l'autre disque ne peuvent occuper au total plus de 180_{°} sur chaque disque puisqu'il doit exister une configuration dans laquelle ces secteurs sont sans le moindre recouvrement;
- imprécision du réglage aux valeurs extrêmes principalement pour les faibles débits ;
- difficulté d'obtenir une linéarité de réglage du fait de la symétrie des ouvertures qui ne permet pas de prendre en compte d'autres paramètres que la section du passage d'eau dans l'équation donnant le débit de la tête du robinet ;
- bruit inévitables dans certains positions de fonctionnement du fait que la forme du (ou des) passage(s) d'eau résultant du recouvrement partiel des ouvertures comporte pendant tout ou partie de la rotation un angle aigu créant des perturbations dans l'écoulement du fluide.

Deux brevets européens 33.428 et 55.181, au nom de la même demanderesse, décrivent des perfectionnements apportés à de tels dispositifs dans le domaine de la réduction du bruit d'écoulement en régime stationnaire ou lors des manoeuvres de variation du débit. Mais ces documents n'apportent qu'une solution partielle aux inconvénients précités.

L'invention qui fait l'objet de la présente demande vise à apporter une solution plus complète aux inconvénients précités avec en particulier une amélioration de la sensibilité de réglage du débit.

L'invention est basée sur la constatation qu'il est possible en se libérant du principe de symétrie des ouvertures elles-mêmes, voire du principe d'identité de l'amplitude angulaire et de la disposition de ces ouvertures sur chacun des disques, d'obtenir une amélioration des performances du produit.

On connaît déjà, de par le document FR-A-910720, un appareil de régulation de débit d'air comportant deux disques munis chacun d'une ouverture pisciforme effilée de faible amplitude angulaire ; ces ouvertures sont adaptées à se superposer tête-bêche de sorte que ce dispositif constitue en fait un étrangleur. On connait par ailleurs, de par les documents GB-A-1.549.789, US-1.751.591 et GB-A-881.325, des robinets à liquide à un seul disque affronté à une portion intégrante du corps de robinet munie d'un petit orifice de passage ; dans chacun de ces disques est ménagée une ouverture allongée angulairement sur plus de 180°. En fait, ces documents divulguent des ouvertures très étroites très à l'écart radialement du centre du disque qui ne se prêtent qu'au passage d'un débit maximal très restreint pour un encombrement donné. Ils ne permettent donc pas de satisfaire aux buts de l'invention qui sont, notamment, de permettre un débit important.

L'invention propose un robinet à liquide comportant un corps creux cylindrique avec un orifice d'amenée de liquide et un orifice de sortie pour l'évacuation du liquide, un disque fixe présentant une ouverture unique de passage pour le liquide, disposé dans ce corps entre les orifices d'entrée et de sortie, un disque rotatif présentant une ouverture unique, pressé contre le disque fixe entre celui-ci et l'orifice de sortie, et une tige de manoeuvre adaptée à commander en rotation le disque rotatif par rapport au disque fixe entre une configuration d'obturation dans laquelle chaque disque obture l'ouverture de l'autre disque et une configuration de passage dans laquelle les ouvertures des deux disques sont au moins partiellement en regard, l'ouverture unique de l'un des disques ayant une forme circonférentiellement allongée qui s'élargit progressivement depuis une première extrémité étroite, jusqu'à une seconde extrémité angulairement décalée vis-à-vis de la première, cette ouverture, en sa seconde extrémité étant bordée extérieurement radialement par un arc de cercle concentrique au bord du disque, caractérisé en ce que le décalage angulaire entre les deux extrémités de ladite ouverture allongée est supérieur à 180_{°}, et en ce que la seconde extrémité est bordée angulairement par un segment de droite approximativement radial avec lequel cet arc de cercle définit un secteur circulaire ouvert circonférentiellement vers ladite extrémité étroite, la somme des amplitudes angulaires des ouvertures des deux disques étant inférieure à 360 °.

De préférence cette ouverture est ménagée sur le disque fixe.

L'invention a pour objet, à la différence notamment du document FR-A-910.720 précité, un robinet à deux disques superposés, présentant une bonne sensibilité de réglage de débit, sur une plage de réglage supérieure à 180°, tout en autorisant un débit maximal important.

Ceci permet :
- une augmentation de l'angle de rotation au-delà de 180 dans le cas d'une ouverture unique ;
- une amélioration de la linéarisation de la courbe de débit en fonction de l'angle d'ouverture, par optimisation du profil de l'ouverture entre ses extremités ;
- la possibilité de contrôler l'évolution de la forme du passage d'eau au fur et à mesure de la rotation du robinet par optimisation en particulier du profil de l'ouverture en son extrémité étroite, indépendamment du profil en l'autre extrémité.

Dans l'invention on trouve ainsi :
- un disque comportant une ouverture de forme circonférentiellement allongée pouvant généralement se comparer à une virgule et se développant avantageusement sur un angle supérieur à 180 ° ;
- un disque comportant une ouverture de forme circonférentiellement allongée ou non, la seule contrainte étant que cette forme soit inscrite dans un secteur dont l'angle au sommet est inférieur au complément à 360 _{°} de l'amplitude angulaire de l'ouverture du disque fixe.

Dans la pratique, la somme des amplitudes angulaires des ouvertures des deux disques est sensiblement inférieure à 360 _{°} pour permettre une obturation réciproque suffisante des disques afin d'assurer l'étanchéité du robinet. De nombreuses formes sont possibles pour les ouvertures des deux disques. De façon à permettre l'exploitation optimale du principe évoqué, l'utilisation de la conception assistée par ordinateur est conseillée. La CAO permet en effet de déterminer facilement la forme et la section du passage d'eau obtenu par recouvrement des ouvertures.

Afin d'améliorer les performances du robinet obtenu, les perfectionnements décrits dans les demandes de brevet européen EP-A-33.428 et EP-A-55.181 peuvent être mis en oeuvre. Cela permet de prendre en compte la forme et la section du passage d'eau en amont et en aval du plan de contact des deux disques.

Des formes appropriées :
- plans inclinés
- arrondis...
   permettent d'éviter la création de turbulences à l'intérieur du fluide qui est maintenu au plus prés des conditions d'écoulement laminaire.
   Selon des dispositions préférées de l'invention :
- l'ouverture du disque rotatif a la forme d'un secteur circulaire admettant un plan bissecteur de symétrie et dont l'amplitude angulaire est inférieure à celle de l'ouverture du disque fixe ; cela permet un grand débattement angulaire entre le début du passage de liquide et la position de débit maximum en ne modifiant guère que le disque fixe;
- chaque disque comportant une ouverture unique, l'amplitude angulaire de l'ouverture du disque fixe est voisine de; mais inférieure à, 270_{°} tandis que l'amplitude angulaire de l'ouverture du disque rotatif est voisine de, mais inférieure à, 90°, ce qui peut paraître comme un bon compromis entre un grand débattement et une section de passage, et donc un débit, important(e) ;
- l'ouverture du disque est formée, à sa première extrémité, par une fente circulaire de largeur constante.

L'invention a également pour objet un disque de robinet du type comportant deux disques superposés réglant le débit d'un liquide, ce disque étant propre à permettre, à la différence notamment du document GB-A-1.549.789 précité, une bonne sensibilité de réglage de débit sur plus de 180°, tout en autorisant un débit maximal important.

L'invention propose à cet effet un disque de robinet, pour robinet du type comportant deux disques superposés réglant le débit d'un liquide, le disque comportant une ouverture unique pour le passage du liquide, cette ouverture ayant une forme circonférentiellement allongée qui s'élargit progressivement depuis une première extrémité, étroite, jusqu'à une seconde extrémité, angulairement décalée vis à vis de la première de plus de 180_{°}, ladite seconde extrémité de l'ouverture étant bordée extérieurement radialement par un arc de cercle concentrique au bord du disque, caractérisé en ce que ladite seconde extrémité de l'ouverture est bordée angulairement par un segment de droite approximativement radial avec lequel cet arc de cercle définit un secteur circulaire ouvert circonférentiellement vers ladite extrémité étroite.

Des objets, caractéristiques et avantages de l'invention ressortent de la description qui suit d'un exemple non limitatif de réalisation donné en regard des dessins annexés sur lesquels :
- la figure 1 est une vue en coupe axiale d'un robinet à deux disques superposés conforme à l'invention en configuration d'ouverture ;
- la figure 2 est une vue partielle en coupe axiale d'une variante de réalisation du disque mobile de ce robinet ;
- la figure 3 est une vue en perspective éclatée du sous-ensemble formé par les deux disques, d'un robinet selon une autre variante, en configuration de débit maximum ;
- la figure 4 est une vue axiale de dessous du disque fixe de la figure 3 ; et - la figure 5 est une vue axiale de dessus du disque rotatif de la figure 3.

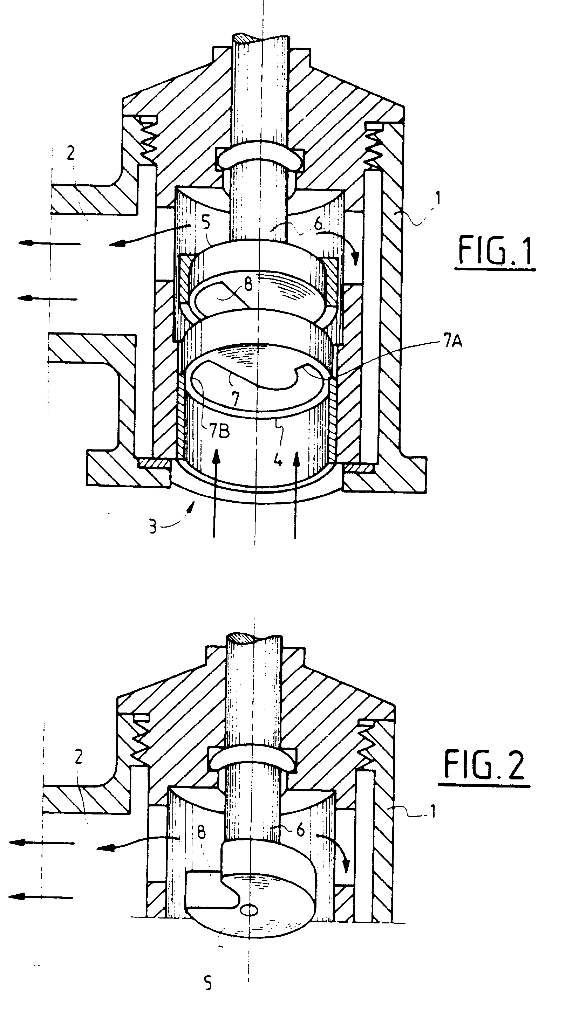

Le robinet représenté à la figure 1 comporte un corps creux 1, de forme généralement cylindrique, sur la surface latérale duquel est prévue une sortie 2, tandis qu'à sa partie basse est prévu un orifice d'alimentation 3 destiné à être connecté à une source de liquide sous pression, par exemple de l'eau domestique.

A l'intérieur de ce corps est monté, entre l'entrée 3 et la sortie 2, un dispositif de réglage de débit comportant un disque fixe 4 et un disque rotatif 5, normalement appliqué contre le disque fixe mais qui, pour une meilleure compréhension, est écarté du disque 4 à la figure 1. Une tige de manoeuvre 6 à laquelle est fixé le disque rotatif permet la commande en rotation de ce dernier en fonction des efforts subis par une poignée disposée à l'autre bout de la tige 6, à l'extérieur du corps de robinet 1. Ces disques sont affrontés l'un à l'autre par des faces planes et lisses de manière à assurer une étanchéité entre eux. Une étanchéité complémentaire est prévue de façon à n'autoriser le franchissement des disques par l'eau qu'au travers des ouvertures prévues à cet effet.

Chacun des disques 4 et 5 comporte une ouverture 7 et 8, respectivement A la figure 2, l'ouverture 8 est ouverture radialement.

Le détail du corps 1 est connu en soi par exemple du brevet EP-33.428, et ne sera pas détaillé ici plus avant.

Lorsque l'eau est introduite par l'orifice 3, son débit dépend de la section de passage dégagée par l'une et l'autre des ouvertures 7 et 8 des disques 4 et 5. Si ces disques sont en une configuration où chaque disque obture l'ouverture de l'autre, le débit est nul. Dans le cas contraire le débit est fixé par la section de recouvrement ou de coïncidence de ces ouvertures.

Conformément à l'invention, l'ouverture 7 du disque fixe 4 a une forme allongée qui s'élargit progressivement depuis une première extrémité 7A, étroite, jusqu'à une seconde extrémité 7B plus large, angulairement décalée vis-à-vis de l'extrémité rétrécie 7A. Cette forme circonférentiellement allongée a ici une forme de virgule, de volute, ou encore de haricot dissymétrique.

Il est en effet important de noter que l'ouverture 7 est dépourvue de tout plan axial bissecteur.

L'ouverture unique 8 du disque mobile 5 peut par contre avoir la forme d'un secteur et admettre un plan bissecteur comme c'est ici le cas. Son amplitude est sensiblement inférieure au complément à 360 _{°} de l'amplitude angulaire, mesurée par rapport à l'axe du disque 4, de l'ouverture 7. En variante non représentée cette ouverture du disque rotatif est également circonférentiellement allongée.

De manière préférée, l'amplitude angulaire de l'ouverture 7 est presque égale à 270 tandis que l'amplitude angulaire de l'ouverture 8 est presque égale à 90 _{°} .

On appréciera qu'un tel choix, qui conduit à n'autoriser un débit de fluide qu'au travers d'un quart environ de la section intérieure du corps 1 va à l'encontre de la démarche normale de l'homme de métier qui vise à permettre une section de passage aussi importante que possible, c'est-à-dire voisine de la moitié de la section intérieure du corps de robinet. Cet inconvénient permet pourtant d'avoir un grand débattement angulaire du disque rotatif entre les configurations de débit insignifiant et de débit maximum, à savoir 270 environ, ce qui donne une grande sensibilité de réglage du débit.

De plus, comme en configuration de débit insignifiant, l'ouverture 8 du disque mobile vient en regard de l'extrémité étroite 7A de l'ouverture 7, la section de coïncidence des deux ouvertures est petite non seulement circonférentiellement mais aussi radialement et s'élargit lentement, ce qui permet que les premiers filets qui traversent l'ensemble des deux disques soient concentrés, à la différence des solutions connues, ce qui se révèle favorable à une réduction des nuisances sonores et à une grande précision du débit à l'ouverture. D'autre part, le fait que l'ouverture soit étroite à où débute le débit d'eau permet une croissance lente de la section de passage avec la rotation du disque rotatif, ce qui procure une grande sensibilité angulaire du débit. En optimisant le profil de cette ouverture, on peut rendre linéaire la variation du débit avec l'angle relatif des deux disques.

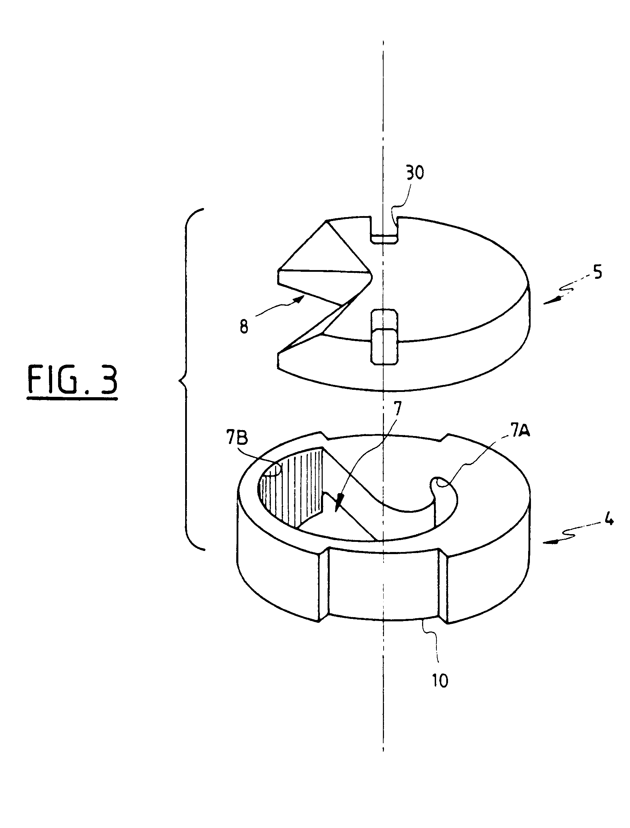

Les figures 3 à 5 détaillent la géométrie des deux disques 4 et 5, dans une forme préférée de réalisation.

Le disque fixe 4 comporte à sa périphérie au moins une encoche 10 (ici deux) destinée au blocage en rotation de ce disque dans le corps 1. Ce disque présente ici un diamètre légèrement supérieur à celui du disque 5.

Ce disque 4, à la différence de celui de la figure 1, s'évase en direction de l'orifice d'entrée 3 (sur une partie de l'épaisseur du disque), ce qui assure une réduction de section de passage pour l'eau avant de franchir le plan d'affrontement des deux disques et réduit les turbulences.

En son extrémité étroite 7A, terminée par un arrondi, l'ouverture à la forme d'une fente annulaire de largeur constante sur environ 90°. Le bord radialement interne se poursuit par un autre arc de cercle 15 de même rayon sur environ 90 (soit environ un demi-cercle) puis se raccorde à un segment rectiligne 16 qui se prolonge jusqu'à l'extrémité 7B. Le bord radialement externe de l'extrémité étroite 7A se poursuit par un segment rectiligne 17 perpendiculaire au segment 16, puis par un arc de cercle 18 à un second segment rectiligne 19 qui se raccorde à un arc de cercle 20 déterminant avec le segment 16 l'extrémité 7B. L'arc de cercle 20 est centré sur le centre O du disque tandis que les bords de l'extrémité 7A et l'arc 15 sont centrés sur un point 1 radialement décalé.

Sauf en la pointe arrondie de l'extrémité 7A et le long de l'arc 20, l'ouverture 7 s'évase soit par des pans inclinés soit par des arrondis jusqu'à une forme bordée par deux segments 21 et 22 perpendiculaires se croisant à la verticale du point I. Le segment 21, tangent à la pointe arrondie de l'extrémité 7A se poursuit sur 90 par un arc de cercle 23 autour de 1 puis par un segment 24, puis après un décrochement 25, par un arc de cercle 26 et enfin un segment de transition 27 avec l'arc 20.

Cet évasement a lieu sur une hauteur comprise entre la moitié et les deux-tiers de l'épaisseur du disque auprès de sa face soumise à l'eau incidente.

L'ouverture 8 du disque 5 débouche radialement et à la forme d'un secteur de 90 ° d'amplitude à compter d'un point P décalé du centre O' de ce disque vers ce secteur, de sorte que l'amplitude de ce secteur, vue de O' est inférieure à 90 °.

Cette ouverture est évasée sauf à sa racine 8A. Cet évasement se traduit par une section de sortie 8B dont l'amplitude angulaire est supérieure à 90°. Cet évasement intervient sur une partie d'autant plus importante de l'épaisseur du disque que l'on s'éloigne du centre du disque.

Le disque 5 comporte en outre des cavités 30 diamétralement opposées destinées à sa fixation à la tige.

Il va de soi que la description qui précède n'a été proposée qu'à titre d'exemple non limitatif.

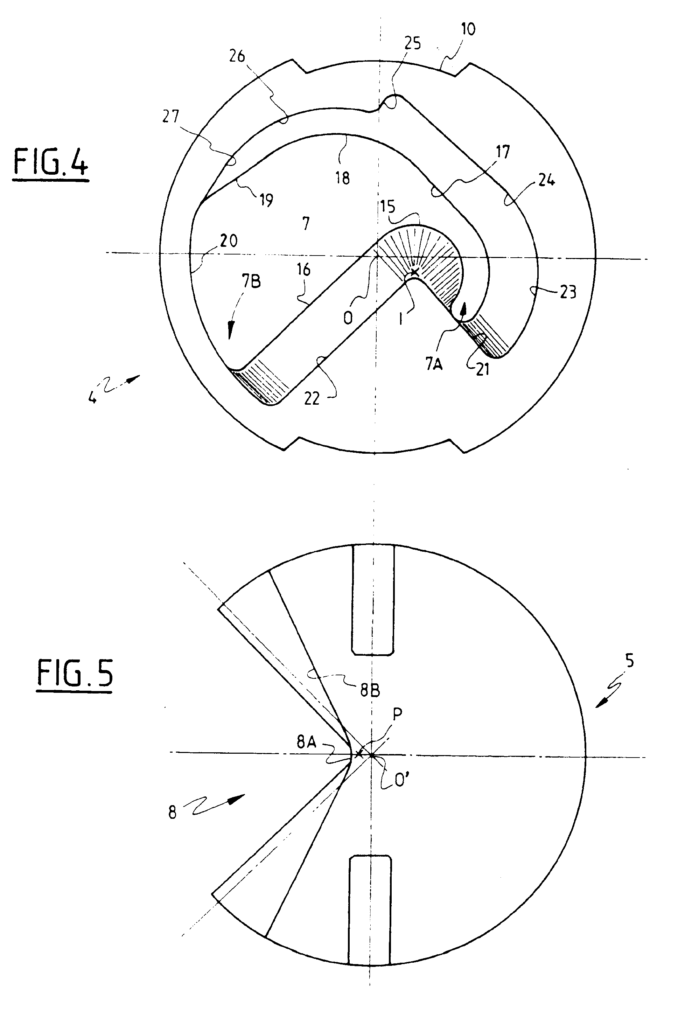

Ainsi par exemple, on peut inverser les deux disques 4 et 5, si l'ouverture du disque 5 ne débouche pas latéralement : le disque de la figure 4 peut donc être utilisé comme disque fixe ou mobile.

## Revendications

1. Disque (4) de robinet, pour robinet du type comportant deux disques superposés réglant le débit d'un liquide, le disque (4) comportant une ouverture unique (7) pour le passage du liquide, cette ouverture (7) ayant une forme circonférentiellement allongée qui s'élargit progressivement depuis une première extrémité (7A), étroite, jusqu'à une seconde extrémité (7B), angulairement décalée vis à vis de la première de plus de 180°, ladite seconde extrémité (7B) de l'ouverture (7) étant bordée extérieurement radialement par un arc de cercle (20) concentrique au bord du disque, caractérisé en ce que ladite seconde extrémité (7B) de l'ouverture (7) est bordée angulairement par un segment de droite approximativement radial (16) avec lequel cet arc de cercle définit un secteur circulaire ouvert circonférentiellement vers ladite extrémité étroite (7A).

2. Disque selon la revendication 1, caractérisé en ce que l'amplitude angulaire de ladite ouverture (7) est voisine de, mais inférieure à, 2700.

3. Disque selon la revendication 1 ou la revendication 2, caractérisé en ce que ladite ouverture (7) est formée, à sa première extrémité, par une fente annulaire de largeur constante.

4. Disque selon la revendication 3, caractérisé en ce que cette fente annulaire s'étend sur environ 90 ° .

5. Disque selon la revendication 4, caractérisé en ce que le bord interne de cette fente annulaire se raccorde intérieurement audit segment de droite approximativement radial (16) par un arc de cercle (15) de même rayon que ce bord interne sur environ 900, et en ce que le bord externe de cette fente se raccorde extérieurement audit arc de cercle (20) par un deuxième segment rectiligne (17) perpendiculaire à ce segment de droite approximativement radial (16) puis par un autre arc de cercle (18) puis par un troisième segment rectiligne (19).

6. Disque selon la revendication 5, caractérisé en ce que ladite ouverture s'évase axialement jusqu'à une forme bordée intérieurement par deux segments perpendiculaires (21, 22) se raccordant à la verticale du centre (I) de la fente circulaire, l'un (21) de ces segments, tangent à la pointe arrondie de la première extrémité, se poursuivant sur 90 par un arc de cercle autour du centre (I) de la fente annulaire puis par un segment (24) puis, après un décrochement (25), par un arc de cercle (26) et enfin par un segment de transition (27) avec ledit arc de cercle (20) de la seconde extrémité lui-même raccordé avec le second (22) desdits segments perpendiculaires.

7. Robinet à liquide comportant un corps creux cylindrique (1) avec un orifice d'amenée de liquide (3) et un orifice de sortie (2) pour l'évacuation du liquide, un disque fixe (4) présentant une ouverture unique (7) de passage pour le liquide, disposé dans ce corps entre les orifices d'entrée et de sortie, un disque rotatif (5) présentant une ouverture unique (8), pressé contre le disque fixe entre celui-ci et l'orifice de sortie, et une tige de manoeuvre (6) adaptée à commander en rotation le disque rotatif par rapport au disque fixe entre une configuration d'obturation dans laquelle chaque disque obture l'ouverture de l'autre disque et une configuration de passage dans laquelle les ouvertures des deux disques sont au moins partiellement en regard, l'ouverture unique (7) de l'un des disques ayant une forme circonférentiellement allongée qui s'élargit progressivement depuis une première extrémité étroite (7A), jusqu'à une seconde extrémité (7B) angulairement décalée vis-à-vis de la première, cette ouverture, en sa seconde extrémité (7B) étant bordée extérieurement radialement par un arc de cercle (20) concentrique au bord du disque, caractérisé en ce que le décalage angulaire entre les deux extrémités (7A, 7B) de ladite ouverture (7) allongée est supérieur à 180°, et en ce que la seconde extrémité est bordée angulairement par un segment de droite approximativement radial avec lequel cet arc de cercle définit un secteur circulaire ouvert circonférentiellement vers ladite extrémité étroite, la somme des amplitudes angulaires des ouvertures des deux disques étant inférieure à 360 °.

8. Robinet selon la revendication 7, caractérisé en ce que cette ouverture (7) est ménagée dans le disque fixe (4).

9. Robinet selon la revendication 8, caractérisé en ce que l'ouverture (8 du disque rotatif (5) a la forme d'un secteur circulaire admettant un plan bissecteur de symétrie et dont l'amplitude angulaire est inférieure à celle de l'ouverture (7) du disque fixe.

10. Robinet selon la revendication 8 ou la revendication 9, caractérisé en ce que l'amplitude angulaire de l'ouverture (7) du disque fixe (4) est voisine de, mais inférieure à, 270 tandis que l'amplitude angulaire de l'ouverture (8) du disque rotatif (5) est voisine de, mais inférieure à, 900.

11. Robinet selon l'une quelconque des revendications 8 à 10, caractérisé en ce que l'ouverture (7) du disque fixe (4) est formée, à sa première extrémité (7A), par une fente circulaire de largeur constante.

12. Robinet selon l'une quelconque des revendications 8 à 11, caractérisé en ce que l'ouverture (7) du disque fixe (4) s'évase axialement en direction de l'orifice d'entrée (3) tandis que l'ouverture (8) du disque rotatif (5) s'évase axialement en direction de l'orifice de sortie.

13. Robinet selon l'une quelconque des revendications 8 à 12, caractérisé en ce que l'ouverture (8) du disque rotatif (5) est radialement ouverte.

## Claims

1. A tap disc (4), for a tap of the type comprising two superposed discs regulating the flow of a liquid, the disc (4) comprising a single opening (7) for the liquid to pass through, this opening (7) having a circumferentially elongated shape which widens progressively from a first, narrow end (7A) to a second end (7B) which is angularly offset relative to the first by more than 180_{°}, the said second end (7B) of the opening (7) being delimited radially externally by an arc of a circle (20) concentric with the edge of the disc, characterized in that the said second end (7B) of the opening (7) is delimited angularly by an approximately radial straight line segment (16) with which the said arc of a circle defines a circular sector circumferentially open towards the said narrow end (7A)

2. A disc according to claim 1, characterized in that the angular amplitude of the said opening (7) is slightly less than 270 _{°} .

3. A disc according to claim 1 or claim 2, characterized in that the first end of the said opening (7) is formed by an annular slot of constant width.

4. A disc according to claim 3, characterized in that the said annular slot extends over about 90_{°}.

5. A disc according to claim 4, characterized in that the inside edge of the said annular slot merges internally with the said approximately radial straight line segment (16) through an arc of a circle (15) having the same radius as the inside edge and extending over about 90 °, and in that the outside edge of the said slot merges externally with the said arc of a circle (20) through a second straight line segment (17) perpendicular to the approximately radial straight line segment (16) followed by another arc of a circle (18) and then by a third straight line segment (19).

6. A disc according to claim 5, characterized in that the said opening widens axially to form a shape bordered internally by the perpendicular segments (21, 22) meeting at a point vertically aligned with the centre (I) of the annular slot, one (21) of these segments, tangential to the rounded end of the first end, being extended over 90 ° by an arc of a circle centred on the centre (I) of the annular slot, followed by a segment (24), followed by a notch (25), followed by an arc of a circle (26), followed finally by a transitional segment (27) merging with the said arc of a circle (20) of the second end which is itself joined to the second (22) of the said perpendicular segments.

7. A tap for liquids comprising a cylindrical hollow body (1) comprising a liquid inlet (3) and a liquid outlet (2), a fixed disc (4) comprising a single opening (7) for liquid to pass through disposed in the body between the inlet and outlet, a rotatable disc (5) which comprises a single opening (8) and is pressed against the fixed disc between the latter and the outlet, and an operating rod (6) adapted to control the rotation of the rotatable disc (5) relative to the fixed disc between a closed configuration in which each disc closes the opening in the other disc and an open configuration in which the openings of the two discs are at least partially opposite one another, the single opening (7) in one of the discs having a circumferentially elongated shape which widens progressively from a first, narrow end (7A) to a second end (7B) which is angularly offset relative to the first, the second end (7B) of this opening being delimited radially externally by an arc of a circle (20) concentric with the edge of the disc, characterized in that the angular offset between the two ends (7A, 7B) of the said elongated opening (7) is more than 180 and in that the second end is delimited angularly by an approximately radial straight line segment with which the said arc of a circle defines a circular sector open circumferentially towards the said narrow end, the sum of the angular amplitudes of the openings in the two discs being less than 360 _{°} .

8. A tap according to claim 7, characterized in that the said opening (7) is made in the fixed disc (4).

9. A tap according to claim 8, characterized in that the opening (8) in the rotatable disc (5) has the shape of a circular sector which can be bisected by a plane of symmetry and the angular amplitude of which is less than that of the opening (7) in the fixed disc.

10. A tap according to claim 8 or claim 9, characterized in that the angular amplitude of the opening (7) in the fixed disc (4) is slightly less than 270 _{°} , whereas the angular amplitude of the opening (8) in the rotatable disc (5) is slightly less than 90 °.

11. A tap according to any one of claims 8 to 10, characterized in that the opening (7) in the fixed disc (4) is formed, at its first end (7A), by an annular slot of constant width.

12. A tap according to any one of claims 8 to 11, characterized in that the opening (7) in the fixed disc (4) widens axially towards the inlet (3) whereas the opening (8) in the rotatable disc (5) widens axially towards the outlet.

13. A tap according to any one of claims 8 to 12, characterized in that the opening (8) in the rotatable disc (5) is open radially.

## Patentansprüche

1. Ventilscheibe (4) für ein Ventil, bestehend aus zwei übereinander angeordneten Scheiben, die den Durchsatz einer Flüssigkeit regulieren, wobei die Scheibe (4) eine einzige Öffnung (7) für den Durchgang der Flüssigkeit besitzt, die eine in Umfangsrichtung längliche Form hat, die sich allmählich von einem ersten, schmalen Ende (7A) an bis zu einem zweiten Ende (7B) verbreitert, das gegen das erste winkelmäßig um mehr als 180 versetzt ist, wobei das zweite Ende (7B) der Öffnung (7) außen radial durch einen zum Rand der Scheibe konzentrischen Kreisbogen (20) begrenzt ist, dadurch gekennzeichnet, daß das zweite Ende (7B) der Öffnung (7) winkelmäßig durch ein annähernd radiales Geradensegment (16) begrenzt ist, mit dem der Kreisbogen einen Kreissektor definiert, der in Umfangsrichtung auf das schmale Ende (7A) zu offen ist.

2. Scheibe nach Anspruch 1, dadurch gekennzeichnet, daß die Winkelamplitude der Öffnung (7) nahe, aber kleiner als 270 _{°} ist.

3. Scheibe nach Anspruch 1 oder Anspruch 2, dadurch gekennzeichnet, daß die Öffnung (7) an ihrem ersten Ende durch einen ringförmigen Schlitz von konstanter Breite geformt ist.

4. Scheibe nach Anspruch 3, dadurch gekennzeichnet, daß dieser ringförmige Schlitz sich über etwa 90 erstreckt.

5. Scheibe nach Anspruch 4, dadurch gekennzeichnet, daß der innere Rand dieses ringförmigen Schlitzes innen an das annähernd radiale Geradensegment (16) über einen Kreisbogen (15) mit demselben Radius wie dieser innere Rand über ungefähr 90 _{°} angeschlossen ist und daß der äußere Rand des Schlitzes außen an den Kreisbogen (20) über ein zweites, zu dem annähernd radialen Geradensegment (16) senkrechtes geradliniges Segment (17), dann durch einen weiteren Kreisbogen (18) und dann durch ein drittes geradliniges Segment (19) angeschlossen ist.

6. Scheibe nach Anspruch 5, dadurch gekennzeichnet, daß die Öffnung sich axial bis zu einer Form ausweitet, die innen durch zwei Zueinander senkrechte Segmente (21, 22) abgegrenzt ist, die an die Vertikale des Mittelpunktes (I) des kreisförmigen Schlitzes angeschlossen sind, wobei eines (21) dieser Segmente, das zur abgerundeten Spitze des ersten Endes tangential ist, auf 90 durch einen Kreisbogen um den Mittelpunkt (I) des ringförmigen Schlitzes verlängert ist, dann durch ein Segment (24), dann, nach einer Stufe (25), durch einen Kreisbogen (26) und schließlich durch ein Segment (27) zum Übergang in den Kreisbogen (20) des zweiten Endes, der seinerseits an das zweite (22) der zueinander senkrechten Segmente angeschlossen ist.

7. Flüssigkeitsventil, bestehend aus einem hohlen zylindrischen Körper (1) mit einer Flüssigkeitseintrittsöffnung (3) und einer Austrittsöffnung (2) für die Abfuhr der Flüssigkeit, einer feststehenden Scheibe (4) mit einer einzigen Öffnung (7) zum Durchgang der Flüssigkeit, die in dem Körper zwischen den Eintritts- und Austrittsöffnungen angeordnet ist, einer rotierenden Scheibe (5), die eine einzige Öffnung (8) besitzt und gegen die feststehende Scheibe zwischen dieser und der Austrittsöffnung gepreßt ist, und einer Betätigungsstange (6), die die rotierende Scheibe bezüglich der feststehenden Scheibe zwischen einer Verschlußkonfiguration in der jede Scheibe die Öffnung der anderen Scheibe verschließt, und einer Durchgangskonfiguration, in der die Öffnungen der beiden Scheiben zumindest teilweise einander gegenüberstehen, in Drehung versetzen kann, wobei die einzige Öffnung (7) einer der Scheiben eine in Umfangsrichtung längliche Form hat, die sich allmählich von einem ersten schmalen Ende (7A) an bis zu einem zweiten gegen das erste winkelmäßig versetzten Ende (7B) verbreitert, wobei die Öffnung an ihrem zweiten Ende (7B) außen radial durch einen zum Rand der Scheibe konzentrischen Kreisbogen (20) begrenzt ist, dadurch gekennzeichnet, daß die winkelmäßige Versetzung zwischen den beiden Enden (7A, 7B) der länglichen Öffnung (7) größer als 180_{°} ist, und daß das zweite Ende winkelmäßig durch ein annähernd radiales Geradensegment begrenzt ist, mit dem der Kreisbogen einen in Umfangsrichtung auf das schmale Ende zu offenen Kreissektor definiert, wobei die Summe der Winkelamplituden der Öffnungen der beiden Scheiben kleiner als 360 _{°} ist.

8. Ventil nach Anspruch 7, dadurch gekennzeichnet, daß die Öffnung (7) in der feststehenden Scheibe (4) vorgesehen ist.

9. Ventil nach Anspruch 8, dadurch gekennzeichnet, daß die Öffnung (8) der rotierenden Scheibe (5) die Form eines Kreissektors hat, der eine winkelhalbierende Symmetrieebene besitzt und dessen Winkelamplitude kleiner als die der Öffnung (7) der feststehenden Scheibe ist.

10. Ventil nach Anspruch 8 oder Anspruch 9, dadurch gekennzeichnet, daß die Winkelamplitude der Öffnung (7) der feststehenden Scheibe (4) nahe, aber kleiner als 270 ist, während die Winkelamplitude der Öffnung (8) der rotierenden Scheibe (5) nahe, aber kleiner als 90 ist.

11. Ventil nach einem der Ansprüche 8 bis 10, dadurch gekennzeichnet, daß die Öffnung (7) der feststehenden Scheibe (4) an ihrem ersten Ende (7A) durch einen kreisförmigen Schlitz mit konstanter Breite geformt ist.

12. Ventil nach einem der Ansprüche 8 bis 11, dadurch gekennzeichnet, daß die Öffnung (7) der feststehenden Scheibe (4) sich axial in Richtung auf die Eintrittsöffnung (3) ausweitet, während die Öffnung (8) der rotierenden Scheibe (5) sich axial in Richtung auf die Austrittsöffnung ausweitet.

13. Ventil nach einem der Ansprüche 8 bis 12, dadurch gekennzeichnet, daß die Öffnung (8) der rotierenden Scheibe (5) radial offen ist.
